(19) Europäisches Patentamt

European Patent Office

Office européen des brevets

(11) **EP 2 615 585 A1**

(12) **EUROPEAN PATENT APPLICATION**

(43) Date of publication:
**17.07.2013 Bulletin 2013/29**

(51) Int Cl.:
**G07B 17/00** (2006.01)     **B41J 11/00** (2006.01)
**B07C 1/14** (2006.01)

(21) Application number: **12305048.6**

(22) Date of filing: **13.01.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Neopost Technologies**
**92220 Bagneux (FR)**

(72) Inventors:
• **Santangeli, Gabriel**
  **92340 Bourg la Reine (FR)**

• **Bernard, Dominique**
  **91300 Massy (FR)**

(74) Representative: **David, Alain et al**
  **Cabinet Beau de Loménie**
  **158, rue de l'Université**
  **75340 Paris Cedex 07 (FR)**

Remarks:
Amended claims in accordance with Rule 137(2) EPC.

(54)     **Envelope dimensioning system**

(57)     Envelope dimensioning system for dimensioning envelope in motion comprising a control unit (40), a mobile support (22) including at least one presence sensor (33B, 33C, 33D, 33E, 33F, 33G, 33H, 331) wherein for acquiring the envelope width the mobile support moves back and forth perpendicularly to a registration wall (16) along which the envelope is conveyed and the control unit determines the width of the envelope from a determination of the at least one presence sensor which has changed of state and the acquired position of the mobile support.

# FIG.3A

**Description**

Field of the Invention

The present invention relates to a device for dimensioning items in motion. More specifically it relates to the determination of the length and width of mailpieces when travelling across a franking machine, in order to apply a correct rate on the mailpiece.

Prior art

Nowadays, prices for carrying mailpieces are based not only on weight and service criteria, but also on the size (thickness, length, and width) of mailpieces sent. Either, it is necessary to check whether the dimensions of the envelope or of the parcel are greater than determined thresholds (for example "letter", "large letter", and "packet" in the British regulations), or it is necessary to check whether the aspect ratio, i.e. the ratio between the length and the width of the envelope or of the parcel, lies between two limit values (e.g.: $1.3<R<2.5$ for the United States, and $R<\sqrt{2}$ for Germany).

In order to assign the appropriate price to each mailpiece in a nonuniform batch, a device for measuring the weight and the dimensions of each envelope is placed upstream from the franking module or "postage meter" of a mail-handling machine, in general at the feed module or "feeder" thereof, and the resulting information is transmitted to a price computer. The weight can also be measured separately by means of a weigh module placed independently in the path along which the envelopes are conveyed, e.g. between the feeder and the franking module.

An example of such a device is given in US 6,832,213 assigned to Pitney Bowes. This patent describe mailing machine comprising a device for feeding an envelope having a width in a path of travel; a device for determining the width of the envelope; and a control device in operative communication with the determining device for using the width of the envelope to ascertain a proper amount of postage to be applied to the envelope. According to a first embodiment, the determining device includes a sensor array located transverse to the path of travel for detecting the presence of the envelope where the sensor array includes an inner plurality of sensors and an outer plurality of sensors located further away from a registration wall than the inner plurality of sensors. According to a second embodiment, the determining device includes a first sensor for detecting a lead edge of the envelope and a sensor line located downstream in the path of travel from the first sensor and at an angle to the path of travel so as to detect a lead corner of the envelope. That apparatus is quite efficient. However, it is complex (the number of sensors is quite important notably in the array). Moreover, to obtain an accuracy of less than 1mm, the number of sensors must be very large or the sensor line substituted by a CCD linear device, the cost of which is unlikely very high and not compatible with a low cost mail handling machine.

Object and Summary of the Invention

The present invention solves the above problems by providing an envelope dimensioning system for dimensioning envelope in motion comprising a control unit, a mobile support including at least one presence sensor wherein for acquiring the envelope dimensions the mobile support moves back and forth perpendicularly to a registration wall along which the envelope is conveyed and the control unit determines the width of the envelope from a determination of the at least one presence sensor which has changed of state and the acquired position of the mobile support.

With this configuration in which the sensors are mobile transverse the envelope transport path, it is possible to determine at low cost the width of envelopes with an accuracy of less than 1mm.

Advantageously, the mobile support includes at its extremity the closest of the registration wall another sensor for acquiring the length of the envelope and the back and forth displacement of the mobile support is provided by a motor (typically a stepper motor).

According to the embodiment, the back and forth displacement of the mobile support is provided by a pinion fixed to the output shaft of the motor which drives a rack fixed to the mobile support or the back and forth displacement of the mobile support is provided by a belt attached to the mobile support and stretched between two gears, wherein a first gear is fixed to the output shaft of a motor and a second gear is freely mounted on a chassis.

The invention also relates to a method for dimensioning an envelope in motion wherein the width of the envelope is determined by:

- detecting a change of state at least one presence sensor integrated into a mobile support moving back and forth perpendicularly to a registration wall along which the envelope is conveyed,
- acquiring by a control unit a mobile support position during this change of state, and
- determining by said control unit the width of the envelope from a determination of the at least one presence sensor which has changed of state and the acquired position of the mobile support.

Preferably, the distance between each presence sensor (typically optical sensors) and the registration wall is a function of the position of the mobile support as known in a lookup table.

Such method further comprises the step of determining the length of the envelope thanks to the masking duration of another sensor and a determined conveying speed of the envelope.

Advantageously, the distance between two presence sensors on the mobile support is equal to the speed of the mobile support during an acquisition of the width of the envelope divided by the speed of the envelope conveying multiplied by twice the minimum length of the envelope to size.

Preferably, the number of presence sensors arranged on the mobile support is at least equal to the maximum width of envelopes to size less the minimum width of envelopes to size divided by the distance between two presence sensors.

Brief description of the drawings

The actual construction, operation and advantages of the present invention will be better understood by referring to the following drawings in which like numerals identify like parts:

Figure 1 is a mailing machine feeder including an envelope dimensioning system according to the invention,
Figure 2 is a general representation of the envelope dimensioning system,
Figure 3A is a detailed view of the dimensioning system showing a first implementation of the motion mechanism, and
Figure 3B is a detailed view of the device dimensioning showing a second implementation the motion mechanism.

Detailed Description of Embodiments

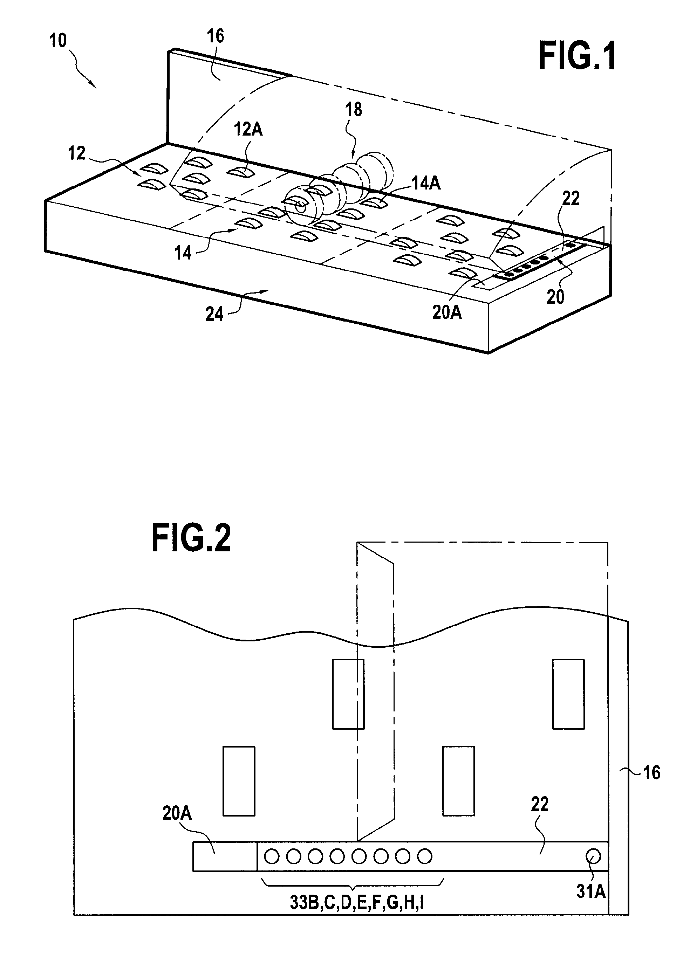

Figure 1 schematically shows a feeding module 10 of a mail-handling machine comprising an envelope dimensioning system according to the invention. The feeding module comprises a reception plate 12 on which the operator places a batch of envelopes to frank. Drive rollers 12A are arranged on the surface of the reception plate 12 in order to convey envelopes along an envelope transport path to a selection area 14 in which the envelopes are separated one by one and registered against a registration wall 16. The separation of the envelopes is performed in this selection area as known by the combined action of rollers 14A and selection pads 18 in that zone. Placed in a cavity 20A of the feeding module just after the output of the selection area 14 is the envelope dimensioning system 20 of the invention.

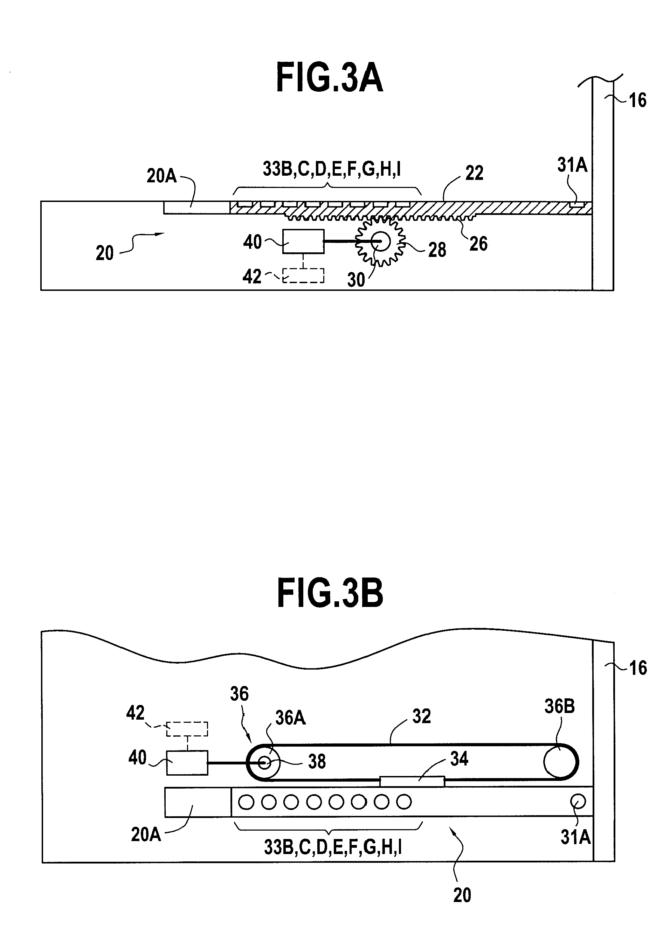

Figure 2 illustrates one embodiment of the envelope dimensioning system according to the invention. The envelope dimensioning system is composed of a mobile support 22 linked to the chassis 24 of the mail-handling machine by a sliding mechanism (illustrated in detail in view of figures 3A and 3B), the mobile support including at least one and typically a plurality of presence sensors 31A, 33B, 33C, 33D, 33E, 33F, 33G, 33H, 331 able to detect the presence of an envelope. Typically those presence sensors are optical sensors.

The mobile support 22 is disposed in the cavity 20A of the mail-handling machine so that its upper part on which the optical sensors 31A, 33B, 33C, 33D, 33E, 33F, 33G, 33H, 331 outcrop is at the same level than the envelope transport path of the mail-handling machine. The sliding mechanism linking the mobile support 22 to the chassis 24 of the mail-handling machine allows the mobile support to perform a back and forth movement perpendiculars to the direction of the envelope transport path.

In the illustrated embodiment, the mobile support 22 has a length of 230 mm and the cavity 20A in which it moves has a length of 280mm. Preferably, the mobile support includes nine optical sensors 31A, 33B, 33C, 33D, 33E, 33F, 33G, 33H, 331. The first sensor 31A (the sensor closer to the registration wall 16) is arranged so that it is always masked when the envelope is located above the mobile support 22. Thus, by combining information from masking duration of the sensor 31A and the known conveying speed of the envelope, it is easy to determine the length of the envelope (note that the determination of the envelope length could be performed classically by another sensor (not shown) disposed out of the support). The other sensors called later as top sensors (sensors used to detect the top of envelopes) 33B, 33C, 33D, 33E, 33F, 33G, 33H, 33I are placed at regular intervals starting at the other end of the mobile support and extending by a determined dimensioning area. The sensor 33I is located on the mobile support at the opposite of the registration wall 16. The top sensors 33B, 33C, 33D, 33E, 33F, 33G, 33H, 33I are spaced of 18.4 mm.

Typically, the mail-handling machine conveys envelopes along the envelope transport path at a speed of 1.5 m/s and standard envelopes have a minimum length of 162 mm. In this configuration, such smaller envelopes take 108ms to entirely pass above the cavity 20A. During this time, the mobile support 22 must have enough time to make a round trip of an amplitude such that the whole dimensioning area will be sensed at least one time by a sensor of the plurality of top sensors 33B-33I. The dimensioning area begins at 91 mm from the registration wall 16 and extends up to 257 mm from the registration wall 16. This dimensioning area allows determining the width of all standard letters which width varies from 110 mm for envelopes in the format "US postcard" to 229 mm for C4 format envelopes. Assuming a mobile support speed of 350 mm/s (typical velocity of moving print head in a printer module of a franking machine), the mobile support 22 must perform movements back and forth with an amplitude of at least 18.9 mm (like that, a recovery of 0.5 mm is provided between the top sensors 33B, 33C, 33D, 33E, 33F, 33G, 33H, 331). Thus, the whole dimensioning area is sensed by the top sensors 33B, 33C, 33D, 33E, 33F, 33G, 33H, 33I in 108ms.

More generally, there is a relationship between the number of sensors (num_sens), envelopes conveying speed (S_env), the distance between sensors (dist_sens), the minimum width to be measured (W_min), the maximum width to be measured (W_max), the minimum length of envelopes (L_min) and the speed of the mobile support (S_sens). This relationship is determined by two followings equations:

$$Dist\_sens = S\_sens / (Lmin \times S\_env \times 2)$$

$$Num\_sens = ((W\_max - W\_min) / Dist\_sens) \, 2.$$

Thus if the mobile support speed is enough high, a single top sensor could be used, but in that case mechanic used to drive the support must be very robust.

A first embodiment of the sliding mechanism of the envelope dimensioning system of the invention is illustrated on figure 3A. In this embodiment, a rack 26 is fixed to the bottom of the mobile support 22 and this rack has a sufficient length to ensure a movement of the mobile support at least equal to the distance between two top sensors. Preferably, the rack has a length of at least 36.8 mm, for safety the length of the rack is 50mm. The translation displacement of mobile support 22 is obtained through a pinion 28 fixed to the output shaft of a motor 30 driven by a control unit 40. The pinion 28 drives the rack 26 in order to convert the rotary motion of the output shaft of the motor 30 in the translation motion of the mobile support 22. When the motor rotates the pinion, the pinion thanks the rack drives the mobile support in translation perpendicular to the direction of envelopes conveying (the envelope transport path). The rotation direction of the motor 30 defines the direction of translation of the mobile support 22.

Figure 3B illustrates a second embodiment of the sliding mechanism. In this other embodiment, a belt 32 is attached to the side of the mobile support 22 by a fixed link 34. The belt is stretched between two gears 36A, 36B. The gear 36A is fixed to the output shaft of a motor 38 driven by a control unit 40 and the gear 36B is freely mounted on the chassis 24. When the motor rotates the wheel 36A, the belt 32 is moving perpendicular to the direction of envelopes conveying. As the belt and the mobile support are mechanically connected by the fixed link 34, the mobile support 22 also moves perpendicularly to the direction of envelopes conveying. The rotation direction of the motor 38 defines the direction of translation of the mobile support 22.

Whatever the embodiment chosen for driving the sliding mechanism of the envelope dimensioning system, for a greater accuracy, it is preferable to use a stepper motor to better control the movements of displacement. In addition, the use of a stepper motor avoid to use an encoder to measure the movement of a mobile support optical sensor 31A, 33B, 33C, 33D, 33E, 33F, 33G, 33H, 33I.

During the manufacturing of the envelope dimensioning system, a lookup table 42 containing the distance between the registration wall and each sensor 31A, 33B, 33C, 33D, 33E, 33F, 33G, 33H, 33I in function of the position the mobile support 22 which is characterized by the stepper motor 30, 38 controls, is recorded. The lookup table 42 is used by the control unit 40 for determining the width of the envelope.

The envelope dimensioning system operates as follows. Once separated from each other, envelopes reach the mobile support 22. The front edge of the envelope is then detected by the first sensor 31A (the nearest of the registration wall 16) which will trigger the acquisition of the envelope length and width. The envelope width acquisition is performed in three steps:

- Determining which top sensor 33B, 33C, 33D, 33E, 33F, 33G, 33H, 33I changes of state (from masked to unmasked of the contrary) during the acquisition. Indeed, at least one presence sensor will change of state by passing under the top edge of the envelope.
- At the detection of the top sensor 33B, 33C, 33D, 33E, 33F, 33G, 33H, 33I changes of the state, the control unit 40 acquires the position of the mobile support 22 which is characterized by the stepper motor 30, 38 controls.
- The determination of the top sensor which has changed of state and the position of the mobile support 22 during the change of state, by using the lookup table 42 allows to the control unit 40 to determine the distance from the top of the envelope to the registration wall 16.

If the envelope is properly registered against the registration wall 16, distance from the top of the envelope to the registration wall defines the width of the envelope. If the envelope is improperly registered against the registration wall, the first sensor 31A will be successively masked, unmasked and masked again which will detect a bad registration. In that case, the control unit 40 sends a message (for example via a display of the feeder not shown) indicating that due to a bad registration, the width could not be determined.

While the invention has been described with reference to exemplary embodiments, it will be understood by those skilled in the art that various changes may be made and equivalents may be substituted for elements thereof without departing from the scope of the invention. For instance, if we consider that the envelope is always correctly registered against the registration wall 16, the front edge of the envelope 16 could also be detected by an input sensor (not shown) not integrated in the mobile support 22 but disposed outside this one. The detection of the front edge of the envelope by this input sensor will trigger the acquisition of the envelope length, the acquisition of the envelope width being always performed by the internal sensor 31A. Knowing the conveying speed of the envelope and the masking duration of this sensor, it is easy (by multiplying these two values) to determine the length of the envelope.

Therefore, it is intended that the invention not be limited to the particular embodiment disclosed as the best or only mode contemplated for carrying out this invention, but that the invention will include all embodiments falling within the scope of the appended claims. Also, in the drawings and the description, there have been disclosed exemplary embodiments of the invention and, although specific terms may have been employed, they are unless otherwise stated used in a generic and descriptive sense only and not for purposes of limitation, the scope of the invention therefore not being so limited. Moreover, the use of the terms first, second, etc. do not denote any order or importance, but rather the terms first, second, etc. are used to distinguish one element from another. Furthermore, the use of the terms a, an, etc. do not denote a limitation of quantity, but rather denote the presence of at least one of the referenced item.

**Claims**

1.  Method for dimensioning an envelope in motion wherein the width of the envelope is determined by:

    - detecting a change of state at least one presence sensor (33B, 33C, 33D, 33E, 33F, 33G, 33H, 331) integrated into a mobile support (22) moving back and forth perpendicularly to a registration wall (16) along which the envelope is conveyed,
    - acquiring by a control unit (40) a mobile support position during this change of state, and
    - determining by said control unit the width of the envelope from a determination of the at least one presence sensor which has changed of state and the acquired position of the mobile support.

2.  Method according to claim 1, wherein the distance between each presence sensor and the registration wall is function of the position of the mobile support as known in a lookup table (42).

3.  Method according to claim 1, further comprising the step of determining the length of the envelope thanks to the masking duration of one another sensor (31A) and a determined conveying speed of the envelope.

4.  Method according to claim 1, wherein the distance between two presence sensors on the mobile support is equal to the speed of the mobile support during an acquisition of the width of the envelope divided by the speed of the envelope conveying multiplied by twice the minimum length of the envelope to size.

5.  Method according to claim 1, wherein the number of presence sensors arranged on the mobile support is at least equal to the maximum width of envelopes to size less the minimum width of envelopes to size divided by the distance between two presence sensors.

6.  Envelope dimensioning system for dimensioning envelope in motion comprising a control unit (40), a mobile support (22) including at least one presence sensor (33B, 33C, 33D, 33E, 33F, 33G, 33H, 331) wherein for acquiring the envelope width the mobile support moves back and forth perpendicularly to a registration wall (16) along which the envelope is conveyed and the control unit determines the width of the envelope from a determination of the at least one presence sensor which has changed of state and the acquired position of the mobile support.

7.  Envelope dimensioning system according to claim 6, wherein the mobile support (22) includes at its extremity the closest of the registration wall another sensor (31A) for acquiring the length of the envelope.

8.  Envelope dimensioning system according to claim 6, wherein the presence sensors are optical sensors.

9.  Envelope dimensioning system according to claim 6 wherein the back and forth displacement of the mobile support is provided by a motor (30, 38).

10. Envelope dimensioning system according to claim 9, wherein the motor is a stepper motor.

11. Envelope dimensioning system according to claim 9, wherein the back and forth displacement of the mobile support is provided by a pinion (28) fixed to the output shaft of the motor which drives a rack (26) fixed to the mobile support.

12. Envelope dimensioning system according to claim 9, wherein the back and forth displacement of the mobile support is provided by a belt (32) attached to the mobile support and stretched between two gears (36A, 36B), wherein a first gear (36A) is fixed to the output shaft of a motor (38) and a second gear (36B) is freely mounted on a chassis (24).

**Amended claims in accordance with Rule 137(2) EPC.**

1. Method for dimensioning an envelope in motion wherein the width of the envelope is determined by:

- detecting a change of state of at least one presence sensor (33B, 33C, 33D, 33E, 33F, 33G, 33H, 331) integrated into a mobile support (22) moving back and forth perpendicularly to a registration wall (16) along which the envelope is conveyed,
- acquiring by a control unit (40) a mobile support position during this change of state, and
- determining by said control unit the width of the envelope from a determination of the at least one presence sensor which has changed of state and the acquired position of the mobile support, wherein the number of presence sensors arranged on the mobile support is at least equal to the maximum width of envelopes to size less the minimum width of envelopes to size divided by the distance between two presence sensors on the mobile support, said distance being equal to the speed of the mobile support during an acquisition of the width of the envelope divided by the speed of the envelope conveying multiplied by twice the minimum length of the envelope to size.

2. Method according to claim 1, wherein the distance between each presence sensor and the registration wall is function of the position of the mobile support as known in a lookup table (42).

3. Method according to claim 1, further comprising the step of determining the length of the envelope thanks to the masking duration of one another sensor (31A) and a determined conveying speed of the envelope.

4. Envelope dimensioning system for dimensioning envelope in motion comprising a control unit (40), a mobile support (22) including at least one presence sensor (33B, 33C, 33D, 33E, 33F, 33G, 33H, 331) wherein for acquiring the envelope width the mobile support moves back and forth perpendicularly to a registration wall (16) along which the envelope is conveyed and the control unit determines the width of the envelope from a determination of the at least one presence sensor which has changed of state and an acquired position of the mobile support, and wherein the number of presence sensors arranged on the mobile support is at least equal to the maximum width of envelopes to size less the minimum width of envelopes to size divided by the distance between two presence sensors on the mobile support, said distance being equal to the speed of the mobile support during an acquisition of the width of the envelope divided by the speed of the envelope conveying multiplied by twice the minimum length of the envelope to size.

5. Envelope dimensioning system according to claim 4, wherein the mobile support (22) includes at its extremity the closest of the registration wall another sensor (31A) for acquiring the length of the envelope.

6. Envelope dimensioning system according to claim 4, wherein the presence sensors are optical sensors.

7. Envelope dimensioning system according to claim 4 wherein the back and forth displacement of the mobile support is provided by a motor (30, 38).

8. Envelope dimensioning system according to claim 7, wherein the motor is a stepper motor.

9. Envelope dimensioning system according to claim 7, wherein the back and forth displacement of the mobile support is provided by a pinion (28) fixed to the output shaft of the motor which drives a rack (26) fixed to the mobile support.

**10.** Envelope dimensioning system according to claim 7, wherein the back and forth displacement of the mobile support is provided by a belt (32) attached to the mobile support and stretched between two gears (36A, 36B), wherein a first gear (36A) is fixed to the output shaft of a motor (38) and a second gear (36B) is freely mounted on a chassis (24).

# FIG.1

10 16 12A 18 14A 12 22 14 20A 20 24

# FIG.2

20A 22 16

33B,C,D,E,F,G,H,I 31A

# FIG.3A

# FIG.3B

Europäisches
Patentamt

European
Patent Office

Office européen
des brevets

**EUROPEAN SEARCH REPORT**

Application Number

EP 12 30 5048

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2008/262978 A1 (COLLINGS PETER T [US] ET AL) 23 October 2008 (2008-10-23) * abstract * * paragraph [0018] - paragraph [0021] * ----- | 1-3,6-12 | INV. G07B17/00 B41J11/00 B07C1/14 |
| Y | EP 0 714 777 A1 (NEOPOST IND [FR]) 5 June 1996 (1996-06-05) * column 7, line 17 - line 38 * ----- | 1-3,6-12 | |
| A | US 2002/158929 A1 (GAASCH TODD M [US] ET AL) 31 October 2002 (2002-10-31) * paragraph [0021] - paragraph [0022] * ----- | 1-3,6-12 | |

TECHNICAL FIELDS
SEARCHED      (IPC)

G07B
B07C
G07D
B41J
G01N

The present search report has been drawn up for all claims

| Place of search | Date of completion of the search | Examiner |
|---|---|---|
| The Hague | 30 March 2012 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 30 5048

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2012

| Patent document cited in search report | | Publication date | Patent family member(s) | | Publication date |
|---|---|---|---|---|---|
| US 2008262978 | A1 | 23-10-2008 | NONE | | |
| EP 0714777 | A1 | 05-06-1996 | DE | 69504458 D1 | 08-10-1998 |
| | | | DE | 69504458 T2 | 28-01-1999 |
| | | | EP | 0714777 A1 | 05-06-1996 |
| | | | FR | 2727547 A1 | 31-05-1996 |
| US 2002158929 | A1 | 31-10-2002 | JP | 3679778 B2 | 03-08-2005 |
| | | | JP | 2003040505 A | 13-02-2003 |
| | | | KR | 20020083951 A | 04-11-2002 |
| | | | US | 2002158929 A1 | 31-10-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6832213 B